# NEUE EUROPÄISCHE PATENTSCHRIFT

(11) **EP 0 426 766 B2**
(45) Veröffentlichungstag und Bekanntmachung des Hinweises auf die Entscheidung über den Einspruch: **13.08.2003**
(45) Hinweis auf die Patenterteilung: 02.02.1994
(21) Anmeldenummer: 89912384.8
(22) Anmeldetag: 16.11.1989
(51) Int. Cl.: A21C 1/06

(54) **MISCHKNETER-VORRICHTUNG UND VERFAHREN ZUR HERSTELLUNG VON TEIG, INSBESONDERE FÜR TEIGWAREN**
MIXER-KNEADER AND PROCESS FOR MAKING DOUGH, IN PARTICULAR FOR PASTA
ENSEMBLE MIXER-PETRISSEUR ET PROCEDE DE FABRICATION DE PATE, EN PARTICULIER POUR PATES ALIMENTAIRES

(30) Priorität: 25.05.1989 CH 196889
(43) Veröffentlichungstag der Anmeldung: 15.05.1991
(73) Patentinhaber: BÜHLER AG, 9240 Uzwil (CH)
(72) Erfinder: MANSER, Josef, CH-9240 Uzwil (CH); EGGER, Friedrich, CH-9244 Niederuzwil (CH); SEILER, Werner, CH-9523 Züberwangen (CH)
(74) Vertreter: Manitz, Finsterwald & Partner GbR
(86) Internationale Anmeldenummer: CH8900202
(87) Internationale Veröffentlichungsnummer: WO90005452

(56) Entgegenhaltungen:
- WO-A-89/04610
- FR-A- 887 144
- GB-A- 754 954
- US-A- 3 332 369
- US-A- 3 457 880
- Patent Abstracts of Japan, Band 9, Nr. 130 (C-284)(1853), 5. Juni 1985
- Patent Abstracts of Japan, Band 12, Nr. 155, (C-494)(3002), 12. Mai 1988

## Beschreibung

Die Erfindung betrifft eine Mischkneter-Vorrichtung für die Herstellung von Rohteig, mit einem geschlossenen Gehäuse, mit einer Gutzuführöffnung, einem preßformfrei ausgebildeten Austragmundstück, sowie in dem Gehäuse kontinuierlich wirkenden Arbeitselementen in der Form von zwei zusammenarbeiten-den Arbeitswellen, an welchen Misch- und Knetelemente mit Zwangsförderwirkung in dem gesamten Arbeitsguerschnitt des Gehäuses angeordnet sind.

Für die Teigbereitung wird heute eine Vielfalt an Verarbeitungsmaschinen verwendet. Teigwaren machen ein zunehmenden Anteil der über die Teigform aufbereiteten Nahrungsmittel aus. Die Formgebung geschieht dabei mehrheitlich durch ein Extrusionsverfahren, bei welchem der zähflüssige Teig mit hohen Drücken von z.B. 80 bis 120 bar durch die Preßformen gedrückt und auf eine gewünschte Länge geschnitten wird.

Für die Formgebung sowie die spätere Formerhaltung werden verschiedenartige Bindekräfte ausgenützt. Die klassische Bindung stellt das sogenannte Proteingerüst dar. Das Proteingerüst ist die netzartige, räumliche Verkettung aller Proteinzellen, welche die in kristalliner Form vorliegende Stärke zusammenhalten. Das Proteingerüst kann beliebig oft verändert und umgebaut werden, jedoch nur so lange als genügend Wasser vorhanden und das Protein nicht durch höhere Temperaturen koaguliert ist. Das pflanzliche Eiweiss verhält sich sehr ähnlich wie das Hühnerei. Wird ein Hühnerei in kaltes Wasser gebrochen, so bleibt es, wenn man dies ganz vorsichtig macht, in seiner Form nahezu erhalten. Bei starkem Rühren resp. Schlagen erhält man eine wässrige, vom Ei gefärbte Eisuppe. Völlig anders ist das Verhalten, wenn dasselbe Ei in kochendes Wasser gebrochen wird. Das Ei erhält in wenigen Sekunden eine fast bizarre Umrissform und behält diese ohne mechanischen Eingriff. Um eine Feinverteilung des Eistoffes zu erhalten, muss im Falle des kochenden Wassers gleichzeitig und sofort mit dem Einwerfen des Eiinhaltes das ganze stark geschlagen und gerührt werden. So bleiben die fein verteilten Eipartikel in der verfeinerten Form erhalten. Die Koagulation der Eimasse geschieht beim Ei bei Vorhandensein von Hitze sofort, innerhalb von Sekunden, und ist irreversibel. Die Gesamtheit der in der Nahrungsmittelindustrie mit Hitze verarbeiten eiweisshaltigen Rohmaterialien muss diesem Sachverhalt Rechnung tragen. Dies gilt insbesondre im Falle von Extrusionsprodukten.

Die Temperaturgrenzwerte bis zu dem irreversiblen Punkt liegt bei 60 bis 80 ° C, also bereits unter der eigentlichen Kochtemperatur (also unter 100°C). Wird eine Produktmasse während der Misch-, Knet- und Teigbildung in den Bereich von 100°C oder darüber gebracht, so bildet sich bei einem anschliessenden Formprozess z.Bsp. für klassische Teigwaren wie Makaroni nur noch ein ungenügendes Proteingerüst aus.

Daraus haben sich über die vergangenen drei bis vier Jahrzehnte zwei eigenständige Nahrungsmittelverarbeitungsverfahren eingebürgert:

### - Prozess A

Alle Produkte, die während der Verarbeitung, insbesondere während der Phase der Teigbildung bewusst einer koch- oder röstartigen Veränderung unterworfen werden. Für die Formung der Teigteile werden andere Bindekräfte als dasjenige vom Proteingerüst vorwiegend ausgenützt. Die Temperaturen gehen vom einem Bereich von etwa 90 bis 100°C bis zu 200 resp. 300°C.

### - Prozess B

Alle Produkte, die während der Verarbeitung eine Temperatur von 60 bis 70°C nicht überschreiten, also bei Vermeidung von irreversiblen Veränderungen bezüglich der Proteinbindungen. Es sind vor allem die klassischen Teigwaren, die erst vor dem Verbrauch durch den Kochprozess eine eigentliche thermische Veränderung (Garkochen, usw) erfahren.

In der Praxis ist für den Prozess A der sogenannte Doppelwellenextruder sehr verbreitet. Dieser wird in der Fachwelt oft als Förderschneckenpaar mit dem schlechtesten Wirkungsgrad bezeichnet. Der schlechte Wirkungsgrad beinhaltet dabei vor allem das Umsetzen der entsprechenden Antriebsleistung in Reibwärme. Die im Teig erzeugte Reibwärme ist einer der Verfahrensparameter zur Aufheizung und zur thermischen Behandlung der Ware. Durch die Reibwärme wird das Produkt auf 100 bis 200°C aufgeheizt und gegebenenfalls mit zusätzlichen Heizelementen einem Kocheffekt unterworfen.

Beim Prozess B, ganz besonders für Teigwarenteig und allen entsprechenden Spezialteigen, muss jede auch nur örtliche Erhöhung der Teigtemperatur über den Bereich von 60 bis 70°C vermieden werden. Soweit die Anmelderin Kenntnis hat, sind beim Prozess B in der jüngeren Vergangenheit für die Teigbildung für Teigwaren fast ausnahmslos Mischtröge zur Vermischung aller Rohmaterialien sowie anschliessend eine oder mehrere Einwellenschnecken für den Aufbau des Proteingerüstes bzw. zur Teigbildung und zum Aufbau des für die endgültige Formgebung benötigten Drucks von 80 bis 120 bar verwendet worden. Die Temperatur kann so nicht nur unter Kontrolle gehalten werden, sondern bleibt wesentlich unter dem kritischen Wert von 60 bis 70 °C, sodass am Produkt keine irreversiblen Schäden entstehen. Der einfachste Beweis hierfür wird durch die Tatsache gegeben, dass Schneidabfälle nach dem Pressen der Ware ohne Qualitätseinbusse wiederum dem zu verpressenden Rohmaterial beigegeben werden dürfen.

Ein wesentlicher Unterschied zwischen dem Prozess A und dem Prozess B liegt darin, dass der Produktdurchsatz für Teigwarenteige bzw. durch Teigwarenpressen bei grösseren Anlagen heute üblicherweise in Grössenordnungen von 500 kg bis 2500 kg pro Stunde liegt. Bei vergleichbaren motorischen Antriebsleistungen für den Prozess A liegt der Produktdurchsatz bei etlichen 100 kg/Stunde.

Ein zweiter Unterschied liegt ferner in der Drehzahl der Pressschnecke. Bei Teigwarenpressen liegt die Drehzahl bei 20 bis 100 U/Min., bei den Zweiwellenextrudern für den Prozess A werden regelmässig Drehzahlen von 200 bis 300 U/Min. und wesentlich darüber angewendet.

Beim Extrusionsverfahren gemäss Prozess A wird ein grosser Teil der investierten Motorleistung in Wärme umgesetzt und nur ein kleiner Teil für den Pressformdruck und der geringste Anteil für die eigentliche Teigbildung. Dies erklärt die große Diskrepanz zwischen dem Verhältnis Motorleistung zu Durchsatz bei Teigwaren einerseits und bei Produkten über Kochextrusionsverfahren mit einem bekanntlich sehr niedrigen Durchsatz andererseits.

Eine Vorrichtung der im Oberbegriff des Anspruchs 1 genannten Art ist aus der GB-PS 1002910 bekannt. Dort bewirken zwei parallel nebeneinanderliegende Förderschnecken eine Vermischung und Vorknetung des Teiges. Anschließend wird der Teig durch die Förderschnecken in eine Misch- und Knetkammer gefördert, in der er mittels eines einzelnen, unabhängig von den Förderschnecken steuerbaren Misch- und Knetwerkzeugs fertig gemischt und geknetet wird.

Der Erfindung liegt die Aufgabe zugrunde, eine Vorrichtung für die Teigbildung für nicht gekochte Ware, insbesondere für Teigwarenprodukte, zu schaffen, die in hygienischer Hinsicht höchsten Anforderungen genügt, einfach aufgebaut ist und die Herstellung eines qualitativ hochwertigen Teiges bei hoher Durchsatzleistung ermöglicht.

Diese Aufgabe wird erfindungsgemäß durch die Merkmale des Anspruchs 1 gelöst.

Durch die erfindungsgemäße Ausgestaltung der Mischkneter-Vorrichtung wird eine intensive Vermischung der Teigkomponenten und eine starke Knetwirkung erreicht. Die Knetwirkung ist hierbei nicht von einem hohen Druckaufbau abhängig, wie dies bei Extrusionsvorrichtungen der Fall ist, sondern von einem wiederholten intensiven Kneten.

Dabei wird ein Walzeffekt zwischen dem Schneckenpaar einerseits sowie ein Schneideffekt bzw. eine Zerstückelung des Teiges andererseits ausgenützt. Bei einer gleichzeitigen guten Vermischung der beteiligten Komponenten sowie einer Homogenisierung wird eine qualitativ hochwertige Teigbildung, insbesondere der Aufbau eines guten Proteingerüstes, gewährleistet. Außerdem wurden bei vielen Versuchen nur eine sehr geringfügige Erwärmung des Gutes und keinerlei örtliche Wärmeschäden festgestellt. Versuche in industriellem Maßstab haben ferner gezeigt, daß der Energiebedarf für die Teigbildung etwa gleich groß ist, wie bisher für den Antrieb der Mischwellen des Mischtroges allein benötigt wurde.

Eine vollständige Einbindung jedes Grießkorns bzw. Mehlpartikels in den Teig wird dadurch gewährleistet, daß dem Produkt keinerlei Ausweichmöglichkeit gegeben wird. Ohne daß besondere Maßnahmen getroffen worden wären, konnten an den Fertigprodukten daher auch keinerlei weiße Punkte festgestellt werden. Vom Ergebnis aus beurteilt, wird sogar vermutet, daß mit der neuen Erfindung eine bis heute nicht erreichte Qualität bezüglich der Teigbildung ermöglicht wird. Der Grund hierfür mag u.a. auch darin liegen, daß für die Teigbildung gerade kein hoher Druck aufgebaut wird, der das Zerschneiden der Teigmasse in Stücke durch die Schneidelemente möglicherweise unterbinden könnte. Die Teigbildung wird mit der vorliegenden Erfindung drastisch verkürzt, sowohl zeitlich wie auch in baulicher Hinsicht, was bei den relativ trockenen Teigen von 25 bis 40 %, bzw. 28 bis 32 % Feuchtigkeit trotz jahrzehntelanger Forschungsarbeit erst durch die vorliegende Erfindung gelungen ist.

Durch die Zwangsförderwirkung der Knetschnecken wird eine Selbstreinigung der Vorrichtung bewirkt. Die Scherelemente können hierbei eine selbsthemmende Wirkung aufweisen. Das Produkt wird dabei auch im Falle des Leerlaufens durchgestoßen.

Ferner weisen bevorzugt die Scherelemente eine über den gesamten Querschnitt wirksame Formgebung auf. Dadurch ist es möglich, mit sehr geringem Kraftbedarf ohne hohen Druckaufbau eine ideale Knetwirkung zu erzielen.

Vorteilhafterweise ist der erste Satz Knetschnecken als Einzugsschneckenpaar und der letzte Satz Knetschnecken als Ausstoß-Schneckenpaar ausgebildet.

Ganz besonders bevorzugt werden nacheinander drei oder mehr Sätze von Schneckenpaaren angeordnet, mit je einem dazwischen angeordneten Satz von Scherelementepaaren.

Bei einem weiteren vorteilhaften Ausgestaltungsgedanken werden die Arbeitswellen als gleichsinnig umlaufende Wellen ausgebildet, wobei die zwei Wellen bevorzugt einen Antrieb für weniger als 200, besonders bevorzugt für 20 bis 100, ganz besonders bevorzugt für 40 bis 70 Umdrehungen pro Minute aufweisen.

In problemlosen Anwendungsfällen können die Arbeitswellen gegenläufig angeordnet werden. Der Vorteil dieses Ausführungsgedankens liegt in baulich vereinfachten Anforderungen an die Vorrichtung bzw. an den Antrieb der Vorrichtung.

Es empfiehlt sich, weiterhin in dem festen Gehäuse Kühl- oder Wärmetauschmittel anzuordnen. Auf diese Weise kann bei Beginn einer Produktion die ganze Vorrichtung auf die für die Verarbeitung optimale Temperatur erwärmt werden, da bei zu tiefen Temperaturen z.Bsp. unter 20°C die Teigbildung erschwert ist und langsamer vor sich geht.

Die Anschlüsse für die Rohmaterialeinspeisung, insbesondere für Griess und Wasser werden unmittelbar in den ersten Abschnitt der mit Schneckenelementen versehenen, als Niederdruck-Zweiwellen-Mischkneter gebaute Vorrichtung angeordnet. Ganz besonders bevorzugt wird die Vorrichtung als kurzer Niederdruck-Mischkneter ausgebildet, wobei für die Herstellung von Teigwaren dieser in Kombination mit einer langen Einwellenpressschnecke verwendet wird. Die Einwellenpressschnecke übernimmt nun den Teil der Homogenisierung in Wechselwirkung mit dem hohen Druckaufbau. Dabei hat es sich gezeigt, dass eine bis heute nicht erreichte optimale Arbeitsteilung zwischen den nur noch zwei Einzelvorrichtungen nun erreicht wird; weil die Teigbildung in Bezug auf das Proteingerüst in der Mischknetervorrichtung vollständig ist, entsteht ein Teig, der sich zwar feucht, aber nichtklebrig anfühlt, so dass die Uebergabe ohne Gefahr des Anklebens oder Verstopfens einfach durch Schwerkraft erfolgen kann. Bevorzugt wird deshalb die Austrittsöffnung des Mischkneters frei gestaltet, also ohne Extrusionsdüsen. Bevorzugt wird die Oeffnung kleiner als der Doppelzylinderquerschnitt, jedoch grösser als der freibleibende Arbeitsquerschnitt zwischen den Arbeitswellen und den Doppelzylindern gewählt. Der hinterste Satz von Schneidmessern zerstückelt den Teig und ohne Druckaufbau im Bereich des Austragmundstückes ergibt sich für den in Produktflussrichtung hintersten Satz an Schneckenelementen vorwiegend eine Ausstossfunktion für die Teigstücke.

Bevorzugt wird die aktive Länge der Einwellen-Pressschnecke wenigstens zweimal länger gebaut als die aktive Länge entsprechender Schneckenelemente des Niederdruck-Zweiwellen-Mischkneters, wobei ganz besonders bevorzugt die Einwellen-Pressschnecke insgesamt wenigstens 2,5mal länger als der Niederdruck-Zweiwellen-Mischkneter ausgeführt wird.

Für höchste Teigwarenqualität wird vorteilhafterweise zwischen dem Niederdruck-Zweiwellen-Mischkneter und der Einwellen-Pressschnecke ein Luft-Vakuum-Anschluss vorgesehen.

Es ist ferner möglich, in dem Bereich der Pressform der Einwellen-Pressschnecke eine Pumpe anzuordnen, zur Herstellung von Produkten wie Cannelloni oder Ravioli.

Die Erfindung betrifft ferner ein Verfahren zur Herstellung von Rohteig für Teigwarenteig mit einem Flüssiganteil von 25 bis 40 Gewichtsprozent nach dem Oberbegriff des Anspruchs 14.

Jeder beteiligte Fachmann in dem Bereich industrieller Teigwarenherstellung wird bestätigen können, dass bereits seit wenigstens zwei bis drei Jahrzehnten die Teigherstellung keine Veränderung erfahren hat, obwohl unangenheme Probleme in Bezug auf Reinigung und Hygiene bekannt waren. Es war bis heute nicht möglich, die Anforderung der hohen Endproduktqualität sicherzustellen, ausser mit den bekannten, in der Praxis angewendeten Verfahren. Einer der herausstechenden Bauteile war der Muldenmischer, der in Anlehnung an die Teigmulde der gewerblichen und industriellen Herstellung von Brot als unersetzbar angenommen wurde. In jüngster Zeit wurde erkannt, dass die von dem Bild des kontinuierlichen Produktstromes unpassende Mulde bzw. das chargenmässige Aufteilen des Produktstromes in der Brotindustrie wieder voll im Einsatz steht, da für die biochemischen Abläufe in der Teigbildung anders nicht optimale Bedingungen gegeben werden können.

Billigteigwaren verlieren beim Kochen einen Teil der Stärke; diese wird mit dem milchig-weisslichen Kochwasser als Kochverlust weggeschüttet. Es werden bei schlechten Teigwaren oft kleine weisse Flecken festgestellt. Diese rühren meistens von einzelnen Mehl- oder Griesspartikeln her, die während der Teigverarbeitung trockengeblieben sind und deshalb nicht in das Proteingerüst eingebunden werden konnten.

Dem neuen Verfahren liegt die Aufgabe zugrunde, die Teigerzeugung zu vereinfachen, insbesondere dass diese besser unter Kontrolle behalten werden kann, wobei die Qualität des Endproduktes höchsten Ansprüchen genügen soll, insbesondere dass auch eine leichte Handhabung aller hygienischen Fragen gewährleistet werden kann.

Diese Aufgabe wird durch die Merkmale des Anspruchs 14 gelöst.

Das neue erfindungsgemässe Verfahren hat erstmals erlaubt, dass für die Teigbildung (speziell in Bezug auf Produkte mit tiefen Wassergehalten von unter 40% bzw. unter 34%) die Teigwirkung von der Problematik der Formgebung zu trennen. Die optimale Teigbildung kann wie es sich gezeigt hat, viel effizienter erfolgen, da erkannt wurde, dass ein echter mechanischer Schneidvorgang wohl nur dann möglich ist, wenn die zu schneidenden Teile räumlich trennbar bzw. verschiebbar sind, Das eine Teil muss vom anderen fliehen können, was jedoch in einer kompakten, unter hohem Druck stehenden Teigmasse nicht möglich ist. In der kompakten Teigmasse ist vielmehr das Bild der zähen flüssigen Masse zutreffend. Bei Flüssigkeiten spricht man nicht von Schneiden. Die allseitigen Bindungen über das Proteingerüst bedingen jedoch ein häufiges mechanisches Verschieben der einzelnen Teigpartien, gleichzeitig auch eine möglichst vollkommene Wasserverteilung.

Bevorzugt wird der Rohteig druckfrei von der ersten Stufe der zweiten Stufe übergeben. Ganz besonders bevorzugt wird der Rohteig von der ersten Stufe stückig ausgeworfen und diese durch die Schwerkraft direkt der zweiten Stufe zur Bildung einer geschlossenen homogenen Teigmasse übergeben.

Im Bereich der Uebergabe wird vorteilhafterweise ein Unterdruck erzeugt, durch Anschliessen des entsprechenden Uebergaberaumes an eine Vakuumpumpe, so dass Lufteinschlüsse in den geformten Teig verhindert werden. Das Gut kann auf diese Weise in der Stufe kontinuierlich in weniger als 60 Sekunden mit einer Guttemperatur von 40 bis 70°C, vorzugsweise von 40 bis 50 °C verarbeitet, und in die fertige Form überführt werden.

Die Erfindung betrifft ferner die Anwendung des Verfahrens zur Herstellung von langen oder kurzen Teigwaren, sowie die Verwendung des Mischkneters für eine Teigwarenlinie zur Herstellung von langen oder kurzen Teigwaren unmittelbar vor der Pressschnecke oder mit zwischengeschaltetem Uebergabeelement.

Die Erfindung wird nachfolgend anhand der Zeichnung beispielsweise näher erläutert.
- Die Fig. 1: zeigt einen Mischkneter, teilweise aufgeschnitten dargestellt.
- Die Fig. 2: zeigt das Zusammenspiel der Arbeitselelemente der Fig. 1 im Grundriss.
- Die Fig. 3: zeigt einen Schnitt II = II der Fig. 2.
- Die Fig. 4: zeigt schematisch eine Variante zu der Fig. 1.
- Die Fig. 5: ist eine Seitenansicht der Fig. 4.
- Die Fig. 6: ist eine bevorzugte Anwendung des Mischkneters für die Herstellung von Teigwaren.
- Die Fig. 7: ist eine ähnliche Konzeption wie die Fig. 6, jedoch für die Herstellung von Produkten wie Cannelloni oder Ravioli.
- Die Fig. 8: zeigt das Zusammenspiel des neuen Mischkneters mit anschliessenden Teigwalzen.
- Die Fig. 9: zeigt eine weitere Ausführungsform des Mischkneters mit Direktübergabe des Rohteiges an eine Einwellenpressschnecke.
- Die Fig. 10: zeigt schematisch den winkligen Zusammenbau von einem Mischkneter mit Einwellenpressschnecken.
- Die Fig. 11: zeigt eine Variante zu der Figur 9.

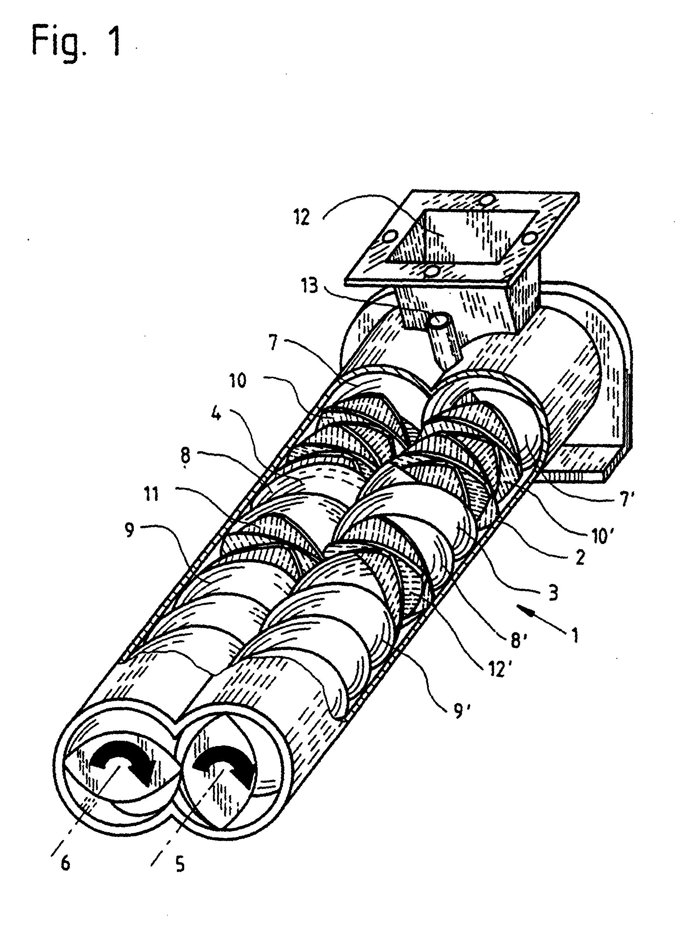

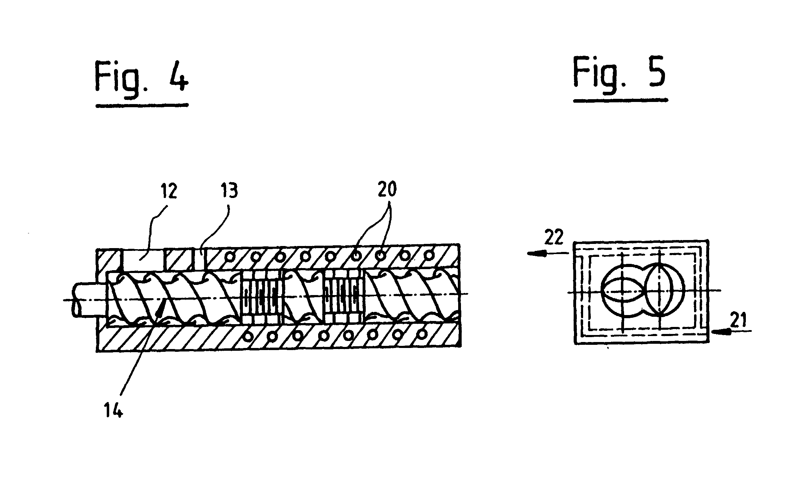

In der Folge wird nun auf die Fig. 1 Bezug genommen, welche einen neuen Mischkneter 1 darstellt, wobei im wesentlichen der obere Teil eines an sich geschlossenen Gehäuses 2 zur Verdeutlichung der Arbeitselemtente 3 resp. 4 für die Darstellung weggelassen ist. Die beiden Arbeitselemente 3 resp. 4 weisen zwei gleichsinnig umlaufende Wellen 5 resp. 6 auf, welche im Uhrzeigersinn drehen. Beide Wellen 5 resp. 6 sind abwechselnd mit je einem Satz Knetschnecken 7,8 und 9 resp. 7',8' und 9' sowie entsprechend einem Satz Scherelementen 10 und 11 resp. 10' und 11' versehen, welche auf den als Keilwelle ausgebildeten Wellen 5 resp. 6 verdrehsicher aufgekeilt sind. Das Gut wird über eine Gutzuführöffnung 12 in den Mischkneter eingespeist. Die flüssige Komponente, z.Bsp. Wasser oder Eisuppe wird ebenfalls direkt nahe an der Gutzuführöffnung 12 durch einen Anschluss 13 eingelassen. Sowohl die Gutzuführöffnung 12 wie auch der Anschluss 13 sind in dem Bereich des als Einzugsschneckenpaares 14 ausgebildeten ersten Schnecken 7 resp. 7' angeordnet, wie auch vereinfacht aus der Fig. 4 zu entnehmen ist.

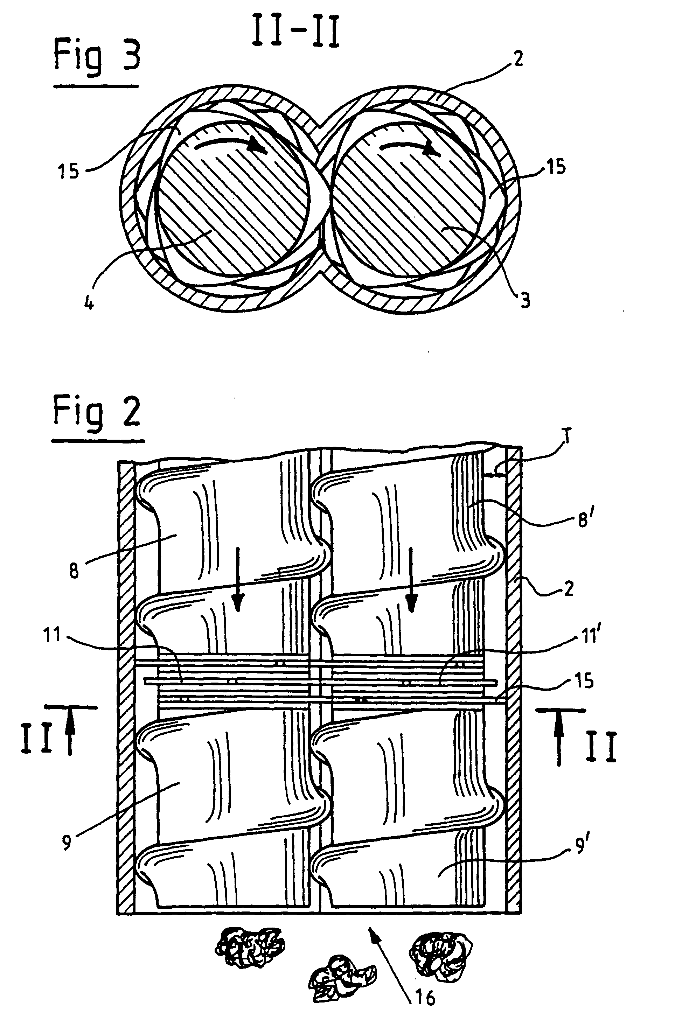

In der Fig. 2 sind je zwei Schneckenpaare 8, 8' und 9, 9' sowie ein dazwischen angeordnetes Scherelementepaar 11, 11' in grösserem Massstab und im Grundriss dargestellt. Das Produkt wird zwangsweise durch die Schnecken 8, 8', 9, 9' durch das Gehäuse 2 getrieben. Dabei passiert das Gut in der Fig. 2 das Scherelementepaar 11, 11'. Jeder Satz von Scherelementen 11, 11' besteht nach dem dergestellten Beispiel aus je drei Poligonscheiben 15, welche wie ein Zahnrad mit drei Zähnen, jedoch im gleichen Sinne drehend, den gesamten, eine liegende Acht bildenden Gehäusequerschnitt durchschneiden. Durch die dreifache Wiederholung der Poligonscheiben 15 und deren eindeutiger Querbewegung ergeben diese einen konsequenten Schneid- und Zerstückelungseffekt für das durch die Schnecken primär in Richtung der Wellenachse 5,6 bewegten Gutes. Sehr vorteilhaft hat es sich auch erwiesen, wenn der für das Produkt frei bleibende Querschnitt nur aus dünnwandigen "Zylinderabschnitten" besteht, d.h. die Schneckengänge weisen eine nur geringe Tiefe "T" auf.

In der Fig. 2 ist das Austrittsende des Mischkneters 1 dargestellt. Dabei wird das Gut, das durch die Scherelemente 11, 11' zerstückelt wird, durch das Ausstossschnekkenpaar 9, 9' in zerstückelter Form bzw. stückig durch ein freies Austragmundstück 16 ausgeworfen. Ein nicht dargestelltes Antriebsgetriebe für beide Wellen 5 resp. 6 ist auf der Seite der Gutzuführöffnung angeordnet, sodass in dem gezeigten Beispiel die beiden Wellen 5 resp. 6 von der Antriebsseite fliegend gelagert sind. Diese Massnahme gestattet einen vereinfachten Ein- und Ausbau der Arbeitselemente, insbesondere eine leichte Sauberhaltung des gesamten Arbeitsraumes, indem z.Bsp. die Arbeitselemente in Richtung des Austragmundstückes 16 ausgezogen werden können.

In den Figuren 4 und 5 ist der gleiche Mischkneter wie in den Figuren 1, 2 und 3 dargestellt, jedoch mit einem Wärmetauschsystem 20, wobei z.Bsp. temperiertes Wasser durch einen Zulaufstutzen 21 eingelassen und durch einen Ablaufstutzen 22 wieder abgelassen werden kann.

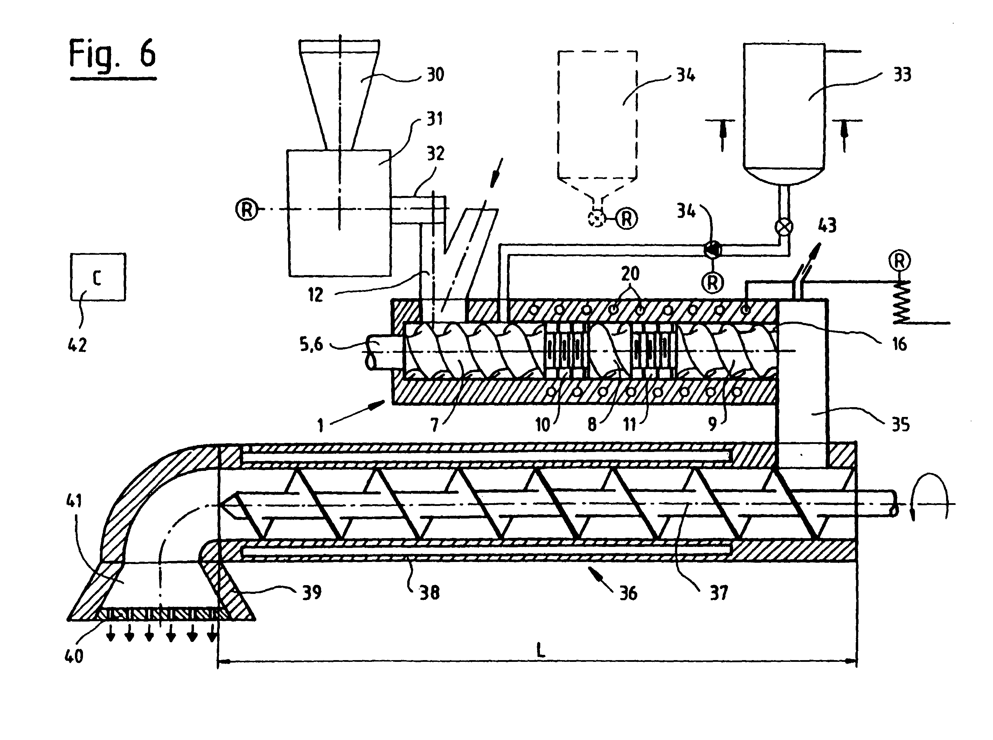

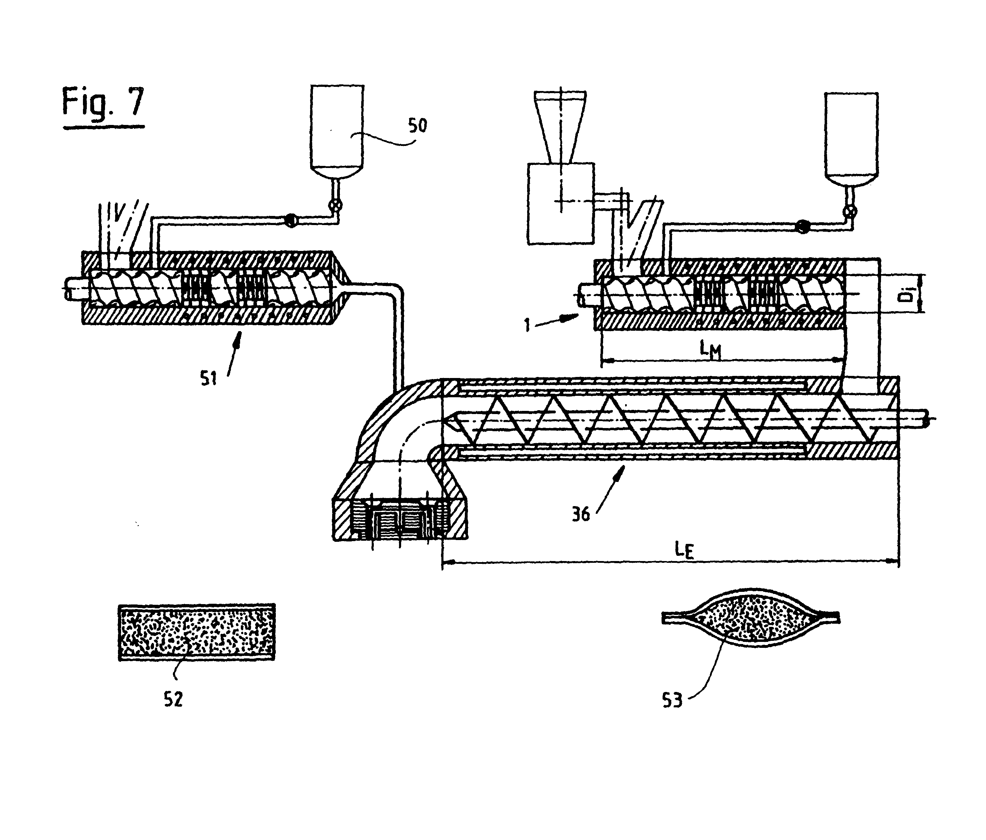

Die Fig. 6 zeigt eine schematische Darstellung einer besonders vorteilhaften Realisierung der neuen Erfindung für die Herstellung von Teigwaren wie Spaghetti, Nudeln, Makaroni usw. Die Trockenkomponente, Griess oder Mehl, wird über einen Trichter 30 mit Dosiervorrichtung 31 und einer Speiseschnecke 32 der Gutzuführöffnung 12 und in dem Anfangsabschnitt bzw. direkt zu dem Einzugsschneckenpaar 14 zugeführt. Eine genau auf die Dosierleistung für die Trockenkomponente errechnete Menge Wasser wird von einem als Waage ausgebildeten Behälter 33 entnommen und über eine Pumpe 34 den Trockenkomponenten bzw. dem Einzugsschneckenpaar zugegeben. Je nach Sorte des gewünschten Endproduktes kann z.Bsp. zusätzlich Eisuppe über einen zweiten Behälter 34 der Mischung zugegeben werden. Es ist aber auch denkbar, in den Behältern Wasser von unterschiedlicher Temperatur zu lagern und die Teilmengen auf eine vorbestimmte Wassertemperatur zu regeln. Dies ist eine der Massnahmen, um in Extremsituationen die Temperatur der Verarbeitung unter Kontrolle zu behalten, z.Bsp. bei Unterbrechungen, Durchsatzänderungen oder dem Anfahrvorgang. In der Fig. 6 ist analog zu der Fig. 1 ein vierfaches Wechselspiel von Mischen bzw. Kneten und Schneiden. Von dem freien Austragmundstück 16 wird das zu Rohteigstücken gewirkte Gut durch Schwerkraft über einen Fallschacht 35 direkt in den Anfangsbereich eine Einwellenpressschnecke 36 abgegeben. Die Einwellenpresse weist eine Pressschnecke 32 in einem gekühlten Mantel 38 auf. Am Ende des Presskanales ist ein Formkopf 39 mit einer eingelegten Pressform 40. Die Einwellenpressschnecke stellt eine spezielle Ausgestaltung der Extrusion dar, wobei unmittelbar vor der Pressform in einem Verteilkopf 41 ein Druck von z.Bsp. 80 bis 120 bar aufgebaut werden muss, damit die doch sehr zähflüssige Teigmasse durch die Formöffnungen gepresst werden kann. Im Gegensatz zu der Funktion der Extrusion der Einwellenschneckenpresse ist der Mischkneter kein Extruder. Alle Elemente der Produktionseinheit, wie auf der Fig. 6 dargestellt, werden durch eine gemeinsame SP-Steuerung 42 gesteuert und koordiniert. Interessant ist das Längenverhältnis L_{M} des Mischkneters zu L_{E} der Einwellenpressschnecke, wobei die aktive Länge der Arbeitselemente verglichen sind (Fig. 7). Es hat sich gezeigt, dass die Teighomogenisierung mit Druckaufbau mit einer verhältnismässig langen Einwellenpressschnecke am optimalsten erreichbar ist, mit einer grossen Arbeitslänge (L_{E}). Dagegen haben überraschenderweise alle Versuche mit sehr langen Arbeitselementen des Mischkneters ausser einem hohen Kraftbedarf und Wärmeentwicklung in dem Produkt keine positiven Effekte gebracht. Die besten Resultate ergeben sich, wenn das Längenverhältnis L_{E} zu L_{M} wenigstens 2 : 1 ist. Von der gesamten baulichen Gestaltung ergeben sich Längenverhältnisse von der Einwellenpressschnecke zu dem Mischkneter von wenigstens 2,5 : 1.

Interessant ist ferner, dass beste Werte insgesamt erreicht wurden, wenn bei dem Mischkneter die aktive Länge L_{M} zu dem Innendurchmesser Di in dem Bereich von 3 bis 7 liegt.

In der Fig. 7 ist zusätzlich noch die Möglichkeit, gefüllte Waren wie Cannelloni 52, Ravioli 53 usw. herzustellen, dargestellt. Die Füllmasse Fleisch- Gemüse- oder Süsskomponenten werden von einem Behälter 50 entnommen und über eine Spezialpumpe 51 direkt über das entsprechende Kanalsystem des Presskopfes in die Ware gepresst.

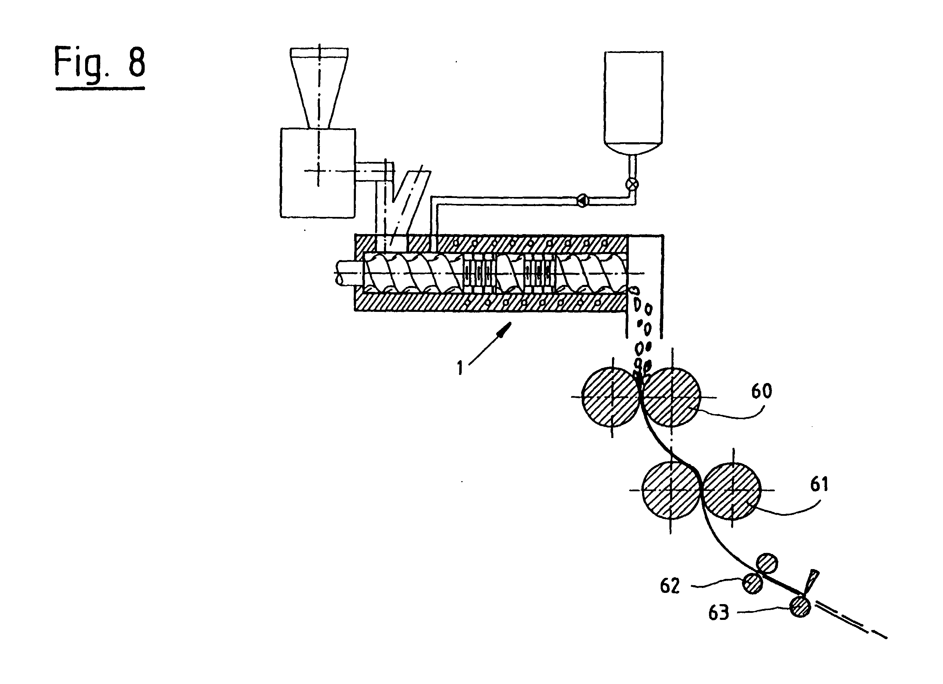

Die Fig. 8 stellt eine weitere interessante Realisierung der Erfindung für gewalzte Teigwaren dar. Die von dem Mischkneter 1 abfallenden Teigstücke werden direkt einer Vorkalibrierwalze 60 und das gebildete Band einer Kalibrierwalze 61 überführt. Das Teigband wird zuerst durch einen Längsschneider 62 und anschliessend durch einen Querschneider 63 in eine gewünschte Teigblattform überführt, welche in einem anschliessenden Trockner auf einen lagerfähigen Wassergehalt gebracht wird.

Die Erfindung kann noch in einer Vielzahl von anderen Spezialprodukten eingesetzt werden, z.Bsp. für die Herstellung von Blätterteig oder für die Paniermehlherstellung zur Herstellung des Rohteiges.

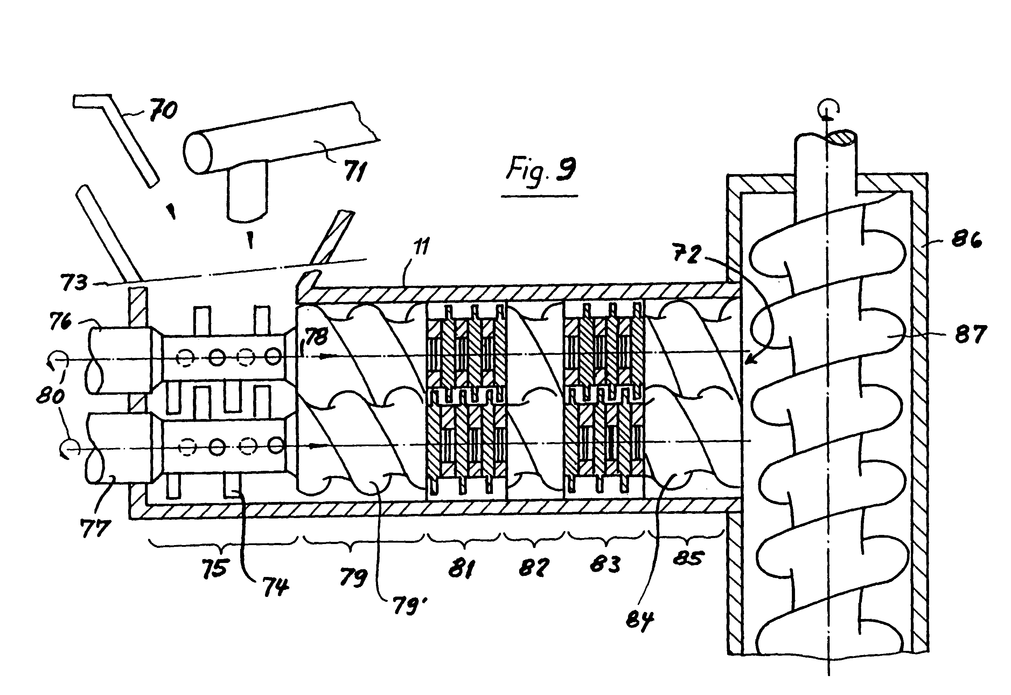

In der Folge wird nun auf die Figur 9 Bezug genommen. Wasser wird über eine Leitung 70 direkt in den Mischkneter 11 dosiert. Die trockenen Rohmaterialkomponenten werden über einen Speisekopf 71 gleichmässig eingespeist. Das trockene Rohmaterial wird gleich im Eintrittsbereich angefeuchtet und innig gemischt und in die mehrfachen Knetzonen geleitet. Der Mischkneter 11 wirkt aus dem Rohgut einen Krümelteig. Wenn das Austrittsende 73 des Mischkneters 11 frei ist, bilden sich Teigstückchen von z.Bsp. 1 bis 5 cm Grösse, teils fast handgrossen Stücken, die einen bröckeligen, zerbröckelnden Eindruck machen, so ähnlich wie das Innere eines gebackenen Brotes. Wird das Austrittsende verengt, so bildet sich eine "Wurst" von ähnlicher Beschaffenheit, jedoch als eine endlose Form. in beiden Fällen hat jedoch der Krümelteig noch nicht die Beschaffenheit eines kompakten homogenen Teiges. Zerreist man nämlich ein Stück des Krümelteiges, so stellt man leicht die eigentliche Teigbeschaffenheit durch die plastischelastische und nichtklebrige Eigenschaft fest. Eine mikroskopische Untersuchung zeigt, dass der Krümelteig am Austrittsende des Mischkneters 11 tatsächlich schon die volle Ausbildung des Proteingerüstes hat. Weil es sich aber um einen Trockenteig handelt, und der eigentliche Formpressdruck von z.Bsp. 80 bis 100 und mehr bzw. noch nicht aufgewendet wurde, gibt es nur scheinbar den Eindruck eines leicht brüchigen Teiges.

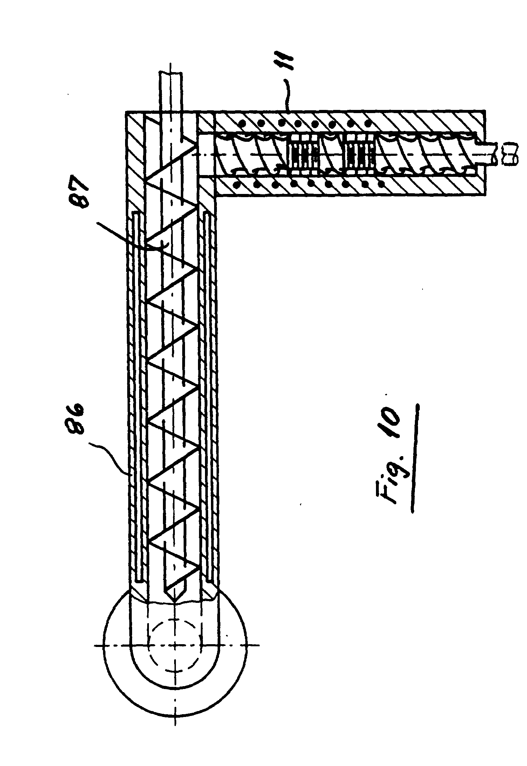

Die Krümelteigbildung geht nun wie folgt vorsich: Die Rohmaterialien Wasser und Griess oder Mehl werden in den Einlauf des Mischkneters 11 gespeist. In den Fig. 9 und 10 sind die eigentlichen Kneterkörper in einer horizontalen Lage, also in Draufsicht, dargestellt. Der Einlauf ist dagegen von der Seite, also in aufrechter Lage, gezeichnet. Mit andereren Worten ist der Kneterkörper um 90° in die aufrechte Bildebene gekippt dargestellt, was mit den Bildschnittlinien 73 angezeigt ist. Das Rohmaterial wird über Einzugselemente 74 resp. Einzugszone 75 von den zwei Arbeitswellen 76 resp. 77 erfasst und nach rechts, gemäss Pfeil 78, in eine erste Knetzone 79 gefördert.

In der Knetzone 79 sind auf jeder Arbeitswelle 76 resp. 77 je ein Paar umlaufender Knetschnecken 79' angeordnet. Beide Arbeitswellen 76 resp. 77 drehen in der gleichen Richtung (Pfeil 80) und kämmen ähnlich wie zwei Schnekken-Zahnräder ineinander. Dadurch entsteht ein zweifacher Effekt: eine Förderung des Gutes (Pfeil 78) und eine Verdichtung, wobei eine verdichtete Masse gebildet wird. Diese Masse wird nun in der ersten eigentlichen Knetzone durch die Knetschnecken 79' vorgeknetet und gewirkt.

Die Knetschnecken 79' können so gestaltet werden, dass sie eine leichte Stau- und doch Förderwirkung ergeben. Die die Knetzone 79 verlassende Masse wird durch eine Scherzone 81 in eine zweite Knetzone 82 ebenfalls mit positiver Zwangsförderung gepresst. In der nächsten Scherzone 83 findet nun der Abschluss der Ausbildung des Proteingerüstes statt. Dabei können in der Knetzone 82 ähnliche oder auch andere Knetelemente teils abwechselnd verwendet werden. Insgesamt findet die Einwirkung der mechanischen Druck- und Förderkräfte ganz gezielt an verhältnismässig sehr kleinen Teigportionen statt, so dass nahezu keine unnötigen Druckkräfte und Reibeffekte entstehen.

Dies ist der Grund, weshalb nur eine geringe Erhöhung der Temperatur stattfindet, verglichen mit älteren Kneteinrichtungen. Am Ende der Scherzone 83 wird die Teigmasse einer Ausstossschnecke 84 resp. durch eine entsprechende Ausstosszone 85 geführt und über das Austrittsende 72 der weiteren Verarbeitung zugeführt. Der gezeigte 2-Wellen-Mischkneter hat den besonderen Vorteil, dass er zu einem sehr hohen Grad selbstreinigend arbeitet. Der Ausstoss des Teiges kann je nach Ausbildung des Austrittsendes als Teigstückchen oder mit leichter Verengung und entsprechedem Druckaufbau strangähnlich erfolgen.

Für die in den einzelnen Arbeitszonen wirkenden Arbeitselemente können selbstverständlich verschiedenartige Ausgestaltungen, insbesondere bezüglich der Knet- und Wirkelemente, verwendet werden, so Lochscheiben, von aussen nach innen gerichtete Widerstandskörper, Stifte usw.

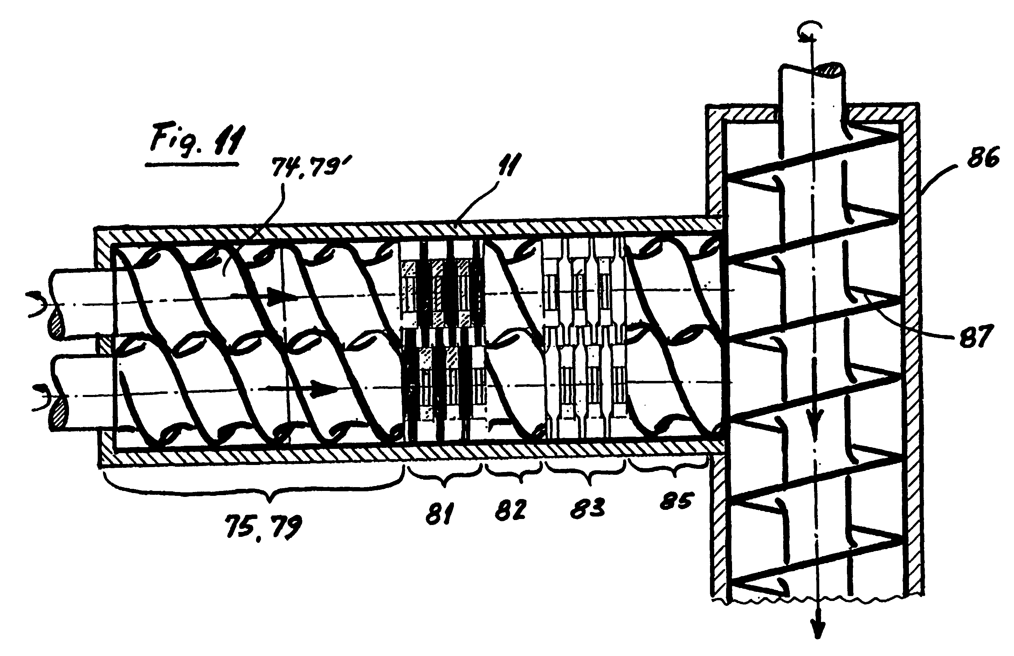

In der in Fig. 9 wie in Fig. 11 dargestellten Ausführungsform findet eine Direktübergabe des Krümelteiges in die Folgeschnecke 86 statt. Die Folgeschnecke kann schon die eigentliche Pressschnecke 87 sein, wie in der Fig. 10 dargestellt ist. Wichtig ist dabei aber, dass die Folgeschnecke 86 eine grössere Förderleistung aufweist als der Mischkneter 11, sodass ein unkontrollierbarer Druckaufbau für den Kneter vermieden wird und damit auch die Gefahr des unkontrollierten Temperaturanstieges vermieden wird. Die Uebergabe des Krümelteiges von dem Mischkneter 11 an die Folgeschnecke 86 erfolgt dadurch, dass die Förderschnecke 87 den eintretenden Teigguss abschneidet.

Die Fig. 10 kann auch so verstanden werden, dass die einzelne dargestellte Mischkneterwelle schematisch eine Welle, drei oder mehrere Wellen symbolisiert.

Die Erfindung wird in der Folge mit vier Beispielen mit weiteren Einzelheiten erläutert.

### Beispiel 1 Spaghetti, Durchmesser 1,75 mm

| | |
|---|---|
| Rohstoffe: | - 100 % Durum Dunst |
| | Granulation kleiner 0,350 mm |
| | Protein 14,1 %/TS |
| | Asche 0,90 %/TS |
| | Nasskleber 34 % |
| | - Wasser, Temperatur 40 ° C |

Die Rohstoffe Griess und Wasser wurden über eine Dosierung mit einer Leistung von 500 kg/h kontinuierlich in den Mischkneter gespeist. Die Schneckendrehzahl wurde mit 42 U/min. fixiert und der Zylinder mit 35°C temperiert. Nach einer Verweil- resp. Misch- und Knetzeit von 16 sec fielen die anfallenden Teigstücke im freien Fall in den Presszylinder. Die Verpressungsparameter wurden wie folgt eingestellt:

| | |
|---|---|
| Schneckendrehzahl | 20 rpm |
| Zylindertemperatur | 28 ° C |
| Kopftemperatur | 35 ° C |
| Druck | 110 bar |
| Vakuum | 0,85 bar |

Die geformten Spaghettis wurden anschliessend auf Stäbe gehängt und in einer Trocknungsanlage auf den Feuchtigkeitsgehalt von 11,5 % H₂O getrocknet.

### Qualitätsbefund

Die mit dem neuen Verfahren hergestellten Spaghettis zeigen rein äusserlich keine Unterschiede zu den traditionellen. Die Transparenz für typische Wasserware aus Durum konnte erreicht werden. Unaufgelöste störende weisse Punkte konnten nicht festgestellt werden. Bezüglich der Kochqualität wurden sehr gute Ergebnisse erzielt. Nach einer Kochzeit von 12 Minuten wurde die "Al dente"- Qualität erreicht. Klebrigkeit und Kochverlust bewegten sich im Rahmen der verglichenen Marktprodukte.

### Beispiel 2 Makkaroni Durchmesser 5 mm x 3,2 mm

| | |
|---|---|
| Rohstoffe: | - 50% Durum Dunst |
| | - 50% Weizenmehl |
| | - Wasser |

Qualität der Ausgangsmischung:

| | |
|---|---|
| Granulation kleiner | 0,350 mm |
| Protein | 13,0 %/TS |
| Asche | 0,70%/TS |
| Produktfeuchte | 12,5 % H₂O |

Die Ausgangsmischung 50% Durum und 50% Weizenmehl wurde über eine Dosierung kontinuierlich mit einer Leistung von 1000 kg/h in den Mischkneter gespeist und innerhalb von 6 sec zu einem homogenen Rohteig geknetet. Im Gegensatz zum Beispiel 1 wurde der Rohteig nicht im freien Fall in die Pressschnecke gespeist, sondern gemäss Fig.9 direkt der Pressschnecke übergeben.

Die Anordnung Kneter-Pressschnecke kann in jeder beliebigen Weise erfolgen. Die Uebergabe des Rohteiges in die Pressschnecke erfolgte im Niederdruckbereich pressformdruckfrei, d.h. der Druck überstieg nie 50 bar.

Die Verpressungsparameter wisen die folgenden Werte auf:

| - Dosierung | Leistung Teigfeuchtigkeit | 1000 kg/h trocken 31% H₂O |
|---|---|---|
| - Mischkneter | Schneckendrehzahl | 60 rpm |
| | Zylindertemperatur | 30 °C |
| | L/D | 1 : 7 |
| - Pressschnecke | Schneckendrehzahl | 28 rpm |
| | Zylindertemperatur | 28 ° C |
| | Kopftemperatur | 45 ° C |
| | Druck | 105 bar |
| | Vakuum | 0,9 bar |

Die Makkaroni wurden analog Beispiel 1 getrocknet.

### Bewertung der Endprodukte

| | |
|---|---|
| Aussehen, ungekocht | transparent, glatt, ohne unaufgelöste Griessteile, Farbe arttypisch gelb |
| Kochverhalten | Kochwasser klar sauber, formbeständig, kein Zusammenfallen, keine Oberflächenschleimigkeit, kein Kleben |

### Beispiel 3 : Eierhörnli, Durchmesser 5 x 3 mm, Länge 25 mm

| | |
|---|---|
| Rohstoffe: | - 100 % Weizenmehl |
| | Protein 12,5 %/TS |
| | Asche 0,48 %/TS |
| | Produktfeuchte 13,1 % H₂O |
| | - Eimenge 3 pro kg Mehl |

Die Rohstoffe wurden mit einer Trockenleistung von 700 kg/h über die Dosierung dem Mischkneter zugeführt und in gleicher Weise wie Beispiele 1 und 2 zu einem Rohteig verarbeitet.

Am Austritt des Mischkneters wurde eine Granuliervorrichtung angebracht, um die anfallenden Teigstükke zu granulieren. Die Uebergabe erfolgte freifallend im Vakuum auf die Pressschnekke.

### Herstellungsparameter

| | | |
|---|---|---|
| - Dosierung | Leistung | 700 kg/h |
| | Teigfeuchte | 31% H₂O |
| - Mischkneter | Schneckendrehzahl | 50 U/min |
| | Zylindertemperatur | 40°C |
| | L/D | 1 : 7 |
| | Schneckenprofil: | |
| | a) Einzugsschnecken | |
| | b) Scher- und Förderelemente | |
| | c) Knetschnecken als Ausstossschneckenpaar | |
| - Pressschnecke | Schneckendrehzahl | 24 U/min |
| | Zylindertemperatur | 28°C |
| | Kopftemperatur | 40°C |
| | Druck | 110 bar |
| | Vakuum | 0,9 bar |

Die an der Pressform geschnittenen Eierhörnli wurden über Schüttel-, Vor- und Endtrockner getrocknet.

### Auswertungsergebnisse

| | |
|---|---|
| Hörnli roh, ungekocht | arttypisch gelb, transparent, ohne unaufgelöste Teile, glatte Oberfläche |
| Hörnli gekocht, | Kochzeit 10 min |
| | Wasseraufnahme 210% |
| | Kochverlust kleiner 5% |
| | nicht klebrig, glatte Oberfläche, formbeständig, Geschmack arttypisch, ohne störende oder negative Geschmacksveränderungen |

### Beispiel 4 : Spiralen, 2flüglig

| | |
|---|---|
| Ausgangsprodukte - | 100% Durum Dunst fein |
| | Granulation kleiner 0,250 mm |
| | Protein 13,5 %/TS |
| | Asche 1,00%/TS |
| | Produktfeuchte 13,6% H₂O |

Der Rohstoff wurde zusammen mit Wasser auf eine Teigfeuchte von 32% H₂O aufgefeuchtet und zu einem Rohteig im Mischkneter verarbeitet. Anstelle der Direkteinspeisung in die Pressschnecke wurden die Teigstücke mittels eines Fördertransportes auf eine umgebaute Teigwarenpresse gefördert und dort direkt in eine Speiseschnekke gespeist und anschliessend zu Spiralen verpresst.

### Herstellungsparameter

| | | |
|---|---|---|
| - Dosierung | Leistung trocken | 800 kg/h |
| | Teigfeuchte | 32% H₂O |
| - Kneter | Analog Beispiel 3 | |
| - Former | Speiseschnecke | 31 U/min |
| | Pressschnecke | 24 U/min |
| | Zylindertemperatur | 25°C |
| | Kopftemperatur | 35°C |
| | Druck | 110 bar |
| | Vakuum | 0,9 bar |

Die anschliessende Trocknung erfolgte analog Beispiel 3.

### Auswertungsergebnisse

Im Vergleich zu Marktprodukten zeigten sich die gleichen Bewertungskriterien wie in Beispiel 3. Die Qualität von Marktprodukten konnte erreicht werden.

## Patentansprüche

1. Mischkneter-Vorrichtung (1) für die Herstellung von Rohteig, mit einem geschlossenen Gehäuse (2), mit einer Gutzuführöffnung (12), einem preßformfrei ausgebildeten Austragmundstück, sowie in dem Gehäuse (2) kontinuierlich wirkenden Arbeitselementen (3) in der Form von zwei zusammenarbeitenden Arbeitswellen (5, 6), an welchen Misch- und Knetelemente (7, 8, 9, 7', 8', 9') mit Zwangsförderwirkung in dem gesamten Arbeitsquerschnitt des Gehäuses angeordnet sind,
**dadurch gekennzeichnet,**
**daß** die Arbeitswellen (5, 6) jeweils in Produktflußrichtung abwechselnd Knetschnecken (7, 8, 9, 7', 8', 9') sowie den Teig zerschneidende bzw. zerstückelnde Scherelemente (10, 11, 10', 11') aufweisen, und daß die Vorrichtung als Niederdruck-Zweiwellen-Mischkneter (1) ausgebildet und dieser einer Einwellen-Preßschnecke (36) zugeordnet ist.

2. Mischkneter-Vorrichtung nach Anspruch 1,
**dadurch gekennzeichnet,**
**daß** der erste Satz Knetschnecken (7, 7') als Einzugsschneckenpaar (14) und der letzte Satz Knetschnecken als Ausstoßschneckenpaar (9, 9') ausgebildet ist.

3. Mischkneter-Vorrichtung nach Anspruch 1 oder 2,
**dadurch gekennzeichnet,**
**daß** nacheinander wenigstens drei Sätze von Schneckenpaaren (7, 7'/8, 8'/9, 9') angeordnet sind, mit je einem dazwischen angeordneten Satz von Scherelementepaaren (10, 10', 11, 11').

4. Mischkneter-Vorrichtung nach einem der vorhergehenden Ansprüche,
**dadurch gekennzeichnet,**
**daß** die Arbeitselemente (3) als zwei gleichsinnig umlaufende Wellen (5, 6) ausgebildet sind, wobei die zwei Wellen (5, 6) bevorzugt einen Antrieb für weniger als 200, besonders bevorzugt für 20 bis 100, ganz .besonders für 40 bis 70 Umdrehungen pro Minute aufweisen.

5. Mischkneter-Vorrichtung nach einem der vorhergehenden Ansprüche,
**dadurch gekennzeichnet,**
**daß** das Verhältnis der aktiven Länge L_{M} zu dem lichten Durchmesser Di des Mischkneters in einem Bereich von 3 bis 7 liegt.

6. Mischkneter-Vorrichtung nach einem der vorhergehenden Ansprüche,
**dadurch gekennzeichnet,**
**daß** in dem festen Gehäuse (2) Kühl- bzw. Wärmetauschmittel (20) angeordnet sind.

7. Mischkneter-Vorrichtung nach einem der vorhergehenden Ansprüche,
**dadurch gekennzeichnet,**
**daß** die insbesondere für Griess und Wasser getrennte Gutzuführöffnung unmittelbar im ersten Abschnitt des mit Schneckenelementen (7, 7') versehenen Mischkneters (1) angeordnet ist.

8. Mischkneter-Vorrichtung nach Anspruch 1,
**dadurch gekennzeichnet,**
**daß** die aktive Länge der Einwellen-Preßschnecke (36) wenigstens zweimal länger ist als die aktive Länge des Mischkneters (1).

9. Mischkneter-Vorrichtung nach Anspruch 1,
**dadurch gekennzeichnet,**
**daß** die Einwellen-Preßschnecke (36) insgesamt wenigstens 2,5 mal länger ist als der Mischkneter (1).

10. Mischkneter-Vorrichtung nach einem der vorhergehenden Ansprüche,
**dadurch gekennzeichnet,**
**daß** der Mischkneter (1) unmittelbar über der Einwellenpresse (36) angeordnet ist und einen Übergabeschacht (35) für die Teigteile an die Einwellenpresse (36) aufweist.

11. Mischkneter-Vorrichtung näch einem der vorhergehenden Ansprüche,
**dadurch gekennzeichnet,**
**daß** zwischen dem Mischkneter (1) und der Einwellen-Preßschnecke (36) ein Luft-Vakuum-Anschluß (43) vorgesehen ist.

12. Mischkneter-Vorrichtung nach einem der vorhergehenden Ansprüche,
**dadurch gekennzeichnet,**
**daß** in dem Bereich der Preßform (40) der Einwellen-Preßschnecke (36) eine Druckpumpe (51) zur Herstellung von Produkten wie Cannelloni (52) oder Ravioli (53) zugeordnet ist.

13. Mischkneter-Vorrichtung nach Anspruch 1,
**dadurch gekennzeichnet,**
**daß** anschließend an den Mischkneter (1) eine oder mehrere Teigwalzen (60, 61) angeordnet sind.

14. Verfahren zur Herstellung von Rohteig für Teigwarenteig mit einem Flüssiganteil von 25 - 40 Gewichtsprozent, welcher in einer anschließenden Verpressung mit einer Schneckenpresse bzw. durch Weiterverarbeitung mittels Walzen in die gewünschte Form gebracht und geschnitten wird, wobei die Rohmaterialien durch ein zusammenarbeitendes Arbeitswellenpaar bei gleichzeitiger Zwangsförderung gemischt und durch wiederholte Kneteinwirkung zu einem Rohteig mit einem ausgebildeten Proteingerüst gewirkt werden,
**dadurch gekennzeichnet,**
**daß** die Rohmaterialien in einer ersten Stufe durch das zusammenarbeitende Arbeitswellenpaar durch ein fortlaufendes Wechselspiel von Kneten und Zerschneiden bzw. Zerstückeln zu einem unverpreßten Rohteig gewirkt werden und in einer zweiten Stufe der Rohteig entweder in einer Einwellenpresse homogenisiert, unter hohen Druck gebracht und durch eine Preßform, oder über Walzen, in die gewünschte Form gepreßt und geschnitten wird.

15. Verfahren nach Anspruch 14,
**dadurch gekennzeichnet,**
**daß** der Rohteig druckfrei von der ersten Stufe der zweiten Stufe übergeben wird.

16. Verfahren nach Anspruch 14 oder 15,
**dadurch gekennzeichnet,**
**daß** das Gut in der ersten Stufe kontinuierlich in weniger als 60 Sekunden mit einer Guttemperatur von 20 bis 70 ° C, vorzugsweise 40 bis 50 ° C verarbeitet wird.

17. Verfahren nach einem der Ansprüche 14 bis 16,
**dadurch gekennzeichnet,**
**daß** der Rohteig von der ersten Stufe stückig ausgeworfen wird und durch die Schwerkraft die Stücke direkt der zweiten Stufe zur Bildung einer geschlossenen homogenen Teigmasse übergeben werden.

18. Verfahren nach einem der Patentansprüche 14 bis 17,
**dadurch gekennzeichnet,**
**daß** Griess, Dunst oder Mehl zusammen mit Wasser, Eisuppe und anderen aromen-, geschmack- oder qualitätsverbessernden Stoffen im Mischkneter zu einem homogenen Teiggranulat geknetet werden, das auf eine Vorkalibrierwalze verteilt und auf dieser zu einem Teigband geformt wird.

19. Verfahren nach Anspruch 18,
**dadurch gekennzeichnet,**
**daß** nach dem Mischkneter mindestens eine oder mehrere Kalibrierwalzen, ein Längsschneider sowie ein Querschneider folgen.

20. Verfahren nach Anspruch 18 oder 19,
**dadurch gekennzeichnet,**
**daß** nach dem Mischkneter mittels einer Schneckenpresse ein Teigband vorgeformt wird, das dann über Kalibrierwalzen zu einem Teigband gewalzt wird.

21. Anwendung des Verfahrens nach einem der Ansprüche 14 bis 20 zur Herstellung von langen oder kurzen Teigwaren.

22. Verwendung des Mischkneters nach einem der Patentansprüche 1 bis 13 für eine Teigwarenlinie zur Herstellung von langen oder kurzen Teigwaren unmittelbar vor der Preßschnecke oder mit zwischengeschaltetem Übergabeelement.

## Claims

1. A kneader-mixer (1) for manufacturing raw dough, with a closed casing (2), with a product feed hole (12), a compression molding-free discharge die ring, as well as continuously active working elements (3) in the casing (2) in the form of two interacting working shafts (5, 6) bearing mixing and kneading elements (7, 8, 9, 7', 8', 9') with forced conveying effect over the entire working cross-section of the casing,
**characterized in that**
the working shafts (5, 6) each have kneading screws (7, 8, 9, 7', 8', 9') and dough-cutting or comminuting shearing elements (10, 11, 10', 11') that alternate in the direction of product flow,
and that the device is designed as a low-pressure tin-shaft kneader -mixer (1), and has allocated to it a single-shaft molding screw (36).

2. The kneader-mixer according to claim 1,
**characterized in that**
the first set of kneading screws (7, 7') is designed as a feed screw pair (14), while the last set of kneader screws is designed as a discharge screw pair (9, 9').

3. The kneader-mixer according to claim 1 or 2,
**characterized in that**
at least three sets of screw pairs (7, 7'/8, 8'/9, 9') are arranged one next to the other, each with a set of shearing element pairs (10, 10', 11, 11') situated in between.

4. The kneader-mixer according one of the preceding claims,
**characterized in that**
the working elements (3) are comprised of two equidirectionally rotating shafts (5, 6), wherein the two shafts (5, 6) preferably have a drive for less than 200, especially preferred for 20 to 100, and most especially 40 to 70 revolutions per minute.

5. The kneader-mixer according one of the preceding claims,
**characterized in that**
the ratio between the active length L_{M} to inside diameter Dᵢ of the kneader-mixer ranges between 3 and 7.

6. The kneader-mixer according one of the preceding claims,
**characterized in that**
refrigerants or heat exchangers (20) are situated in the solid casing (2).

7. The kneader-mixer according one of the preceding claims,
**characterized in that**
the product feed opening split in particular for grit and water is arranged in the first section of the kneader-mixer (1) provided with screw elements (7, 7').

8. The kneader-mixer according to claim 1,
**characterized in that**
the active length of the single-shaft molding screw (36) is at least twice the active length of the kneader-mixer (1).

9. The kneader-mixer according to claim 1,
**characterized in that**
the single-shaft molding screw (36) is a total of at least 2.5 times longer than the kneader-mixer (1).

10. The kneader-mixer according one of the preceding claims,
**characterized in that**
the kneader-mixer (1) is situated immediately over the single-shaft molding screw (36), and has a transfer shaft (35) for the dough portions on the single-shaft molding screw (36).

11. The kneader-mixer according one of the preceding claims,
**characterized in that**
an air vacuum hookup (43) is provided between the kneader-mixer (1) and single-shaft molding screw (36).

12. The kneader-mixer according one of the preceding claims,
**characterized in that**
a pressure pump (51) for manufacturing products like cannelloni (52) or ravioli (53) is allocated to the single-shaft molding screw (36) in an area of the compression mold (40).

13. The kneader-mixer according to claim 1,
**characterized in that**
one or more dough rollers (60, 61) are subsequently arranged on the kneader-mixer (1).

14. A procedure for manufacturing raw dough for pasta dough with 25-40 % liquid, which is brought to the desired shape and cut during subsequent press molding with a screw press or through further processing with rollers, wherein the raw materials are mixed with an interacting working shaft pair during simultaneous forced feeding, and repeatedly kneaded to yield a raw dough with a developed protein structure,
**characterized in that**
the raw materials are continuously and alternatively kneaded and cut or comminuted into an unpressed raw dough in a first stage by the interacting working shaft pair, and the raw dough is either homogenized in a single-shaft molding screw, placed under high pressure and molded and cut to yield the desired shape by means of a compression mold or rollers in a second stage.

15. The procedure according to claim 14,
**characterized in that**
the raw dough is transferred from the first to the second stage under no pressure.

16. The procedure according to claim 14 or 15,
**characterized in that**
the product is continuously processed in the first stage in less than 60 seconds at a product temperature of 20 to 70 °C, preferably 40 to 50 °C.

17. The procedure according to one of claims 14 to 16,
**characterized in that**
the raw dough is discharged in pieces from the first stage, and gravity conveys the pieces directly to the second stage to form a closed, homogeneous dough mass.

18. The procedure according to one of claims 14 to 17,
**characterized in that**
grit, fumes or flour are kneaded together with water, egg soup and other odor, taste or quality-improving substances in the kneader-mixer into a homogeneous dough granulate that is divided onto a pre-calibrating roller and molded into a dough strip on it.

19. The procedure according to claim 18,
**characterized in that**
at least one or more calibrating rollers, a lengthwise cutter and a cross-cutter follow the kneader-mixer.

20. The procedure according to claim 18 or 19,
**characterized in that**
a dough strip is pre-shaped by a molding screw after the kneader-mixer, and then rolled to a dough strip via calibrating rollers.

21. An application of the procedure according to one of claims 14 to 20 for manufacturing long or short pasta products.

22. The application of the kneader-mixer according to one of claims 1 to 13 for a pasta line for manufacturing long or short pasta products immediately before the molding screw or with interspersed transfer element.

## Revendications

1. Dispositif de pétrin-mélangeur (1) pour la fabrication de pâte brute, comportant une carcasse fermée (2), un orifice d'alimentation en produit (12), une bouche de sortie conformée sans matrice, ainsi que des éléments de travail (3) fonctionnant en continu dans la carcasse (2), sous la forme de deux arbres de travail (5, 6) coopérants, sur lesquels sont disposés des éléments de mélange et de pétrissage (7, 8, 9, 7', 8', 9') ayant un effet de convoyage forcé dans toute la section transversale de travail de la carcasse,
**caractérisé en ce que**
les arbres de travail (5, 6) présentent respectivement, dans le sens de flux du produit alternativement des vis de pétrissage (7, 8, 9, 7', 8', 9') ainsi que des éléments de cisaillage (10, 11, 10', 11') découpant et morcelant la pâte et que le dispositif est conçu comme un pétrin-mélangeur à deux arbres à basse pression (1) et qu'une vis de pressage à un arbre (36) lui est associée.

2. Dispositif de pétrin-mélangeur selon la revendication 1,
**caractérisé en ce que**
le premier jeu de vis de pétrissage (7, 7') est conçu sous forme d'une paire de vis d'introduction (14) et que le dernier jeu de vis de pétrissage sous forme d'une paire de vis d'éjection (9, 9').

3. Dispositif de pétrin-mélangeur selon la revendication 1 ou 2,
**caractérisé en ce que**
au moins trois jeux de paires de vis (7, 7', 8, 8', 9, 9') ayant respectivement un jeu de paires d'éléments de cisaillage (10, 10', 11, 11') disposé entre eux sont installés l'un après l'autre.

4. Dispositif de pétrin-mélangeur selon une des revendications précédentes,
**caractérisé en ce que**
les éléments de travail (3) sont conçus comme deux arbres tournant dans le même sens (5, 6), les deux arbres (5, 6) présentant de préférence une propulsion prévue pour moins de 200, de manière particulièrement privilégiée 20 à 100, tout particulièrement privilégiée 40 à 70 rotations par minute.

5. Dispositif de pétrin-mélangeur selon une des revendications précédentes,
**caractérisé en ce que**
le rapport de la longueur active L_{M} au diamètre libre Di du pétrin-mélangeur se situe dans une plage de 3 à 7.

6. Dispositif de pétrin-mélangeur selon une des revendications précédentes,
**caractérisé en ce que**
des moyens de refroidissement ou d'échange de chaleur (20) sont disposés dans la carcasse fixe (2).

7. Dispositif de pétrin-mélangeur selon une des revendications précédentes,
**caractérisé en ce que**
l'orifice d'alimentation en produit séparé notamment pour la semoule et l'eau est disposé directement dans la première section du pétrin-mélangeur (1) équipé des éléments à vis (7, 7').

8. Dispositif de pétrin-mélangeur selon la revendication 1,
**caractérisé en ce que**
la longueur active de la vis de pressage à un arbre (36) est au moins deux fois supérieure à la longueur active du pétrin-mélangeur (1).

9. Dispositif de pétrin-mélangeur selon la revendication 1,
**caractérisé en ce que**
la vis de pressage à un arbre (36) est au total au moins 2,5 fois plus longue que le pétrin-mélangeur (1).

10. Dispositif de pétrin-mélangeur selon une des revendications précédentes,
**caractérisé en ce que**
le pétrin-mélangeur (1) est disposé directement au dessus de la presse à un arbre (36) et présente un puits de transfert (35) pour transférer les morceaux de pâte à la presse à un arbre (36).

11. Dispositif de pétrin-mélangeur selon une des revendications précédentes,
**caractérisé en ce que**
entre le pétrin-mélangeur (1) et la vis de pressage à un arbre (36), un raccordement à air-vide (43) est prévu.

12. Dispositif de pétrin-mélangeur selon une des revendications précédentes,
**caractérisé en ce que**
dans la zone de la matrice (40) de la vis de pressage à un arbre (36), une pompe à pression (51) servant à la fabrication de produits comme les cannellonis (52) ou les raviolis (53) est associée à la vis de pressage à un arbre (36).

13. Dispositif de pétrin-mélangeur selon la revendication 1,
**caractérisé en ce que**
un ou plusieurs cylindres à pâte (60, 61) sont disposés à la suite du pétrin-mélangeur (1).

14. Procédé pour la fabrication de pâte brute pour pâtes alimentaires comportant une proportion de liquide de 25 à 40 pour cent en poids, qui est amenée à la forme souhaitée et découpée lors d'un pressage consécutif à l'aide d'une presse à vis ou par transformation ultérieure au moyen de cylindres, les matières brutes étant mélangées par une paire d'arbres de travail coopérants avec un convoyage forcé simultané et travaillées par action répétée de pétrissage pour former une pâte brute à structure à protéines constituée,
**caractérisé en ce que**
les matières brutes sont travaillées dans un premier niveau par la paire d'arbres de travail coopérants grâce à une alternance continue de pétrissage et de découpe ou morcellement pour former une pâte brute non pressée et que, dans un deuxième niveau, la pâte brute est soit homogénéisée dans une presse à un arbre, mise sous forte pression et pressée au moyen d'une matrice ou de cylindres pour obtenir la forme souhaitée et est découpée.

15. Procédé selon la revendication 14,
**caractérisé en ce que**
la pâte brute est transférée hors pression du premier niveau au deuxième niveau.

16. Procédé selon la revendication 14 ou 15,
**caractérisé en ce que**
le produit est transformé en continu au premier niveau en moins de 60 secondes à une température de produit de 20 à 70 °C, de préférence 40 à 50 °C.

17. Procédé selon une des revendications 14 à 16,
**caractérisé en ce que**
la pâte brute est éjectée en morceaux du premier niveau et que les morceaux sont transférés directement au deuxième niveau par force de gravité pour former une masse de pâte homogène finie.

18. Procédé selon une des revendications 14 à 17,
**caractérisé en ce que**
la semoule, la Dunst ou la farine sont pétries ensemble avec de l'eau, du bouillon d'oeuf et autres substances améliorant l'arôme, le goût ou la qualité dans le pétrin-mélangeur pour former un granulat de pâte homogène qui est réparti sur un cylindre de pré-calibrage et façonné sur celui-ci pour former une bande de pâte.

19. Procédé selon la revendication 18,
**caractérisé en ce que**
succèdent au pétrin-mélangeur au moins un ou plusieurs cylindres de calibrage, un sectionneur longitudinal ainsi qu'un sectionneur transversal.

20. Procédé selon la revendication 18 ou 19,
**caractérisé en ce que**
en aval du pétrin-mélangeur est préformée au moyen d'une presse à vis une bande de pâte qui est ensuite laminée en bande par des cylindres à pâte.

21. Application du procédé selon une des revendications 14 à 20 pour la fabrication de pâtes alimentaires longues ou courtes.

22. Utilisation du pétrin-mélangeur selon une des revendications 1 à 13 pour une chaîne de pâtes alimentaires servant à la fabrication de pâtes alimentaires longues ou courtes juste en amont de la vis de pressage ou avec un élément de transfert intercalé.
